# FASCICULE DE BREVET EUROPEEN

(11) **EP 3 041 619 B1**
(45) Date de publication et mention de la délivrance du brevet: **24.05.2017**
(21) Numéro de dépôt: 14786976.2
(22) Date de dépôt: 25.08.2014
(51) Int. Cl.: B21D 53/78, B23P 15/04, B21K 3/04, B21J 13/02

(54) **PROCEDE DE CONFORMAGE A HAUTE TEMPERATURE D'UN RENFORT METALLIQUE D'AUBE**
VERFAHREN ZUM HOCHTEMPERATURFORMEN EINER METALLKLINGENVERSTÄRKUNG
METHOD FOR THE HIGH-TEMPERATURE SHAPING OF A METAL BLADE REINFORCEMENT

(30) Priorité: 02.09.2013 FR 1358360
(43) Date de publication de la demande: 13.07.2016
(73) Titulaire: Snecma, 75015 Paris (FR)
(72) Inventeur: ABOUSEFIAN, Jacques, F-77550 Moissy-Cramayel Cedex (FR); BOSSELUT, Antoine, F-77550 Moissy-Cramayel Cedex (FR); KLEIN, Gilles, Charles, Casimir, F-77550 Moissy-Cramayel Cedex (FR)
(74) Mandataire: David, Alain
(86) Numéro de dépôt international: PCT/FR2014/052117
(87) Numéro de publication internationale: WO 2015/028750

(56) Documents cités:
- WO-A1-94/23890
- FR-A1- 2 961 866
- FR-A1- 2 965 496
- US-A1- 2009 165 299

## Description

### Arrière-plan de l'invention

Le domaine de l'invention est celui des turbomachines, notamment celui des aubes de soufflante, en matériau composite, de turbomachines dont le bord d'attaque comporte un renfort structurel métallique et la présente invention concerne donc plus particulièrement un procédé de conformage à haute température de pièces métalliques telles que par exemple un renfort structurel métallique de bord d'attaque d'aube composite de turbomachine.

Toutefois, l'invention est aussi bien applicable à la réalisation de toutes pièces de forme géométrique complexe et à la réalisation de renforts métalliques destinés à renforcer un bord d'attaque ou un bord de fuite d'aube de tout type de turbomachine, terrestre ou aéronautique, et notamment un turbomoteur d'hélicoptère ou un turboréacteur d'avion.

Il est connu d'équiper les aubes de soufflante de turbomachine, réalisées en matériaux composites, d'un renfort structurel métallique s'étendant sur toute la hauteur de l'aube et au-delà de leur bord d'attaque comme mentionné dans le document EP1908919 déposé au nom de la demanderesse. Un tel renfort permet de protéger l'aubage composite lors d'un impact d'un corps étranger sur la soufflante, tel que par exemple un oiseau, de la grêle ou encore des cailloux.

En particulier, le renfort structurel métallique protège le bord d'attaque de l'aube composite en évitant des risques de délaminage, de rupture de fibre ou encore d'endommagement par décohésion fibre/matrice. De façon connue, il est réalisé soit entièrement par fraisage à partir d'un bloc de titane, ce qui nécessite de nombreuses opérations de reprises et des outillages complexes impliquant des coûts de réalisation importants soit à partir d'une préforme obtenue à partir d'un simple barreau métallique et d'une succession d'étapes de forge, comme décrit notamment dans la demande de brevet FR2961866 déposée au nom de la demanderesse, et sur laquelle se base le préambule des revendications indépendantes 1 et 9. Les dernières étapes de forge sont toutefois particulièrement délicates compte tenu de la présence des contre-dépouilles de ce renfort. C'est pourquoi la demanderesse a développé dans sa demande de brevet FR2965496 un outillage pour la mise en forme à chaud dit «multi-effets» qui permet de réaliser une déformation de façon tridimensionnelle (i.e selon différentes directions de façon simultanée) au moyen d'une presse simple effet (donc avec un seul axe de travail) peu onéreuse et dans des conditions de hautes températures, c'est-à-dire au-delà de 850°C (de l'ordre de 940°C pour la réalisation d'un renfort en titane).

Si ce procédé donne globalement satisfaction par sa rapidité et sa simplicité, il présente toutefois encore certains inconvénients du fait de la cinématique des mouvements de fermeture de l'outillage. Il en résulte un positionnement, dans cet outillage, de la pièce à réaliser peu maitrisé et en outre un retrait peu aisé de l'empreinte lors du démoulage, source de déformation de cette pièce.

### Objet et résumé de l'invention

La présente invention a donc pour but principal de pallier de tels inconvénients en proposant un procédé de conformage d'une pièce métallique préformée ayant deux ailettes latérales s'étendant depuis un nez, mettant en oeuvre un outillage de forme comportant :
- une étape de mise en place de la pièce métallique préformée dans une première matrice inférieure dudit outillage,
- une étape de maintien dans une première position déterminée de ladite pièce métallique préformée au moyen d'un premier insert central mobile,
- une étape de formation d'une desdites ailettes latérales de ladite pièce métallique préformée dans sa forme finale en alignement avec ledit nez au moyen d'une première matrice supérieure mobile,
- une étape de retournement de ladite pièce métallique préformée dont l'une desdites ailettes latérales est ainsi conformée dans sa forme finale,
- une étape de mise en place de ladite pièce métallique préformée dans une seconde matrice inférieure dudit outillage,
- une étape de maintien dans une seconde position déterminée de ladite pièce métallique préformée au moyen d'un second insert central mobile, et
- une étape de formation de l'autre desdites ailettes latérales de ladite pièce métallique préformée dans sa forme finale en alignement avec ledit nez au moyen d'une seconde matrice supérieure mobile.

Ainsi, le blocage de la pièce dans des positions déterminées avant le conformage de ses deux ailettes latérales dans leur forme finale évite le déplacement constaté avec l'outillage de l'art antérieur.

De préférence, ladite étape de maintien dans une première position déterminée est effectuée par un déplacement selon une première direction du premier insert central mobile.

Avantageusement, ladite étape de maintien dans une seconde position déterminée est effectuée par un déplacement selon une troisième direction du second insert central mobile. Ladite direction de déplacement dudit second insert central mobile correspond sensiblement au plan moyen desdites ailettes latérales.

De préférence, ledit second insert central mobile est recouvert d'une couche de protection en Nitrure de bore pour en faciliter le retrait lors de l'extraction de ladite pièce métallique préformée dudit outillage de forme.

L'invention concerne également un outillage de forme apte au conformage à haute température d'une pièce métallique préformée obtenue selon le procédé de conformage précité.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif et sur lesquels :
- la figure 1 est une vue en coupe du bord d'attaque d'une aube de soufflante en matériau composite montrant son renfort structurel métallique ;
- la figure 2 est une vue en perspective de la pièce métallique préformée servant à réaliser le renfort structurel métallique de la figure 1 avant la mise en oeuvre du procédé de conformage selon l'invention ;
- les figures 3 à 6 illustrent les positions correspondantes de l'outillage de forme servant à la mise en oeuvre du procédé de conformage selon l'invention.

### Description détaillée d'un mode de réalisation

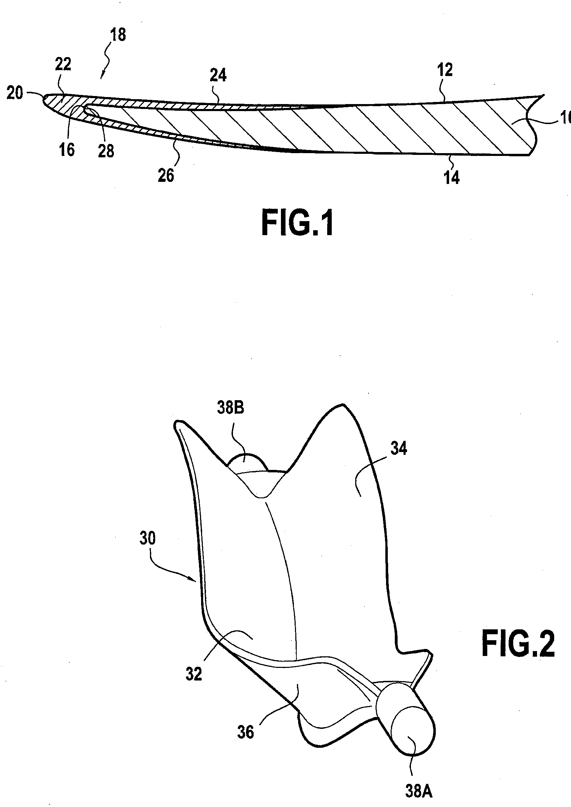

La figure 1 est une vue en coupe partielle d'une aube composite comportant un renfort structurel métallique de bord d'attaque obtenu au moyen du procédé de conformage selon l'invention.

L'aube 10 illustrée est par exemple une aube mobile de soufflante d'une turbomachine (non représentée) s'étendant entre un bord d'attaque et un bord de fuite depuis un pied d'aube et jusqu'à un sommet de cette aube et obtenue typiquement par drapage (remplissage collage) d'un matériau composite tissé. A titre d'exemple, le matériau composite utilisé peut être composé par un assemblage de fibres tissées de carbone et d'une matrice résineuse, l'ensemble étant formé par moulage au moyen d'un procédé classique d'injection de résine sous vide de type RTM (pour «Resin Transfer Molding»).

Une surface intrados 12 et une surface extrados 14 forment les faces latérales de l'aube 10 qui relient le bord d'attaque 16 au bord de fuite (non représenté) de l'aube 10. Comme il est connu, l'aube 10 comporte un renfort structurel métallique 18, préférentiellement à base titane (pour sa grande capacité d'absorption de l'énergie due aux chocs), collé au niveau de son bord d'attaque 16 dont il épouse la forme et qu'il prolonge pour former un bord d'attaque 20, dit bord d'attaque du renfort. Le renfort structurel métallique est collé sur l'aube 10 au moyen d'une colle connue de l'homme du métier, comme par exemple une colle cyano-acrylique ou encore époxy.

De façon classique, le renfort structurel métallique 18 est une pièce monobloc comportant une section sensiblement en forme de V présentant une base 22 formant le bord d'attaque 20 et prolongée par deux flancs latéraux 24 et 26 épousant respectivement l'intrados 12 et extrados 14 de l'aube 10. Les flancs 24, 26 présentent un profil effilé ou aminci en direction du bord de fuite de l'aube. La base 22 comporte un profil interne 28 arrondi apte à épouser la forme arrondie du bord d'attaque 16 de l'aube 10.

Le procédé de conformage selon l'invention permet de finaliser la réalisation d'un renfort structurel métallique tel qu'illustré à la figure 1 (le renfort étant illustré dans son état final monté sur une aube 10 mobile de soufflante de turbomachine), à partir d'une pièce métallique préformée 30 telle que l'illustre la perspective de la figure 2.

La pièce métallique préformée 30 est obtenue, comme il est connu des premières étapes du procédé de la demande FR2961866 précitée, à partir d'un barreau métallique de section circulaire, dont le diamètre et la longueur sont fonction de l'aube souhaitée. Ce barreau est tout d'abord déformé selon deux directions pour obtenir une double cambrure, au moyen d'une presse isotherme à une température comprise entre 700°C et 940°C (dans le cas d'un barreau de titane). Puis, le barreau ainsi vrillé est l'objet d'un bourrage sous presse, au moyen d'une presse hydraulique ou à vis à une température de l'ordre de 940°C, avant d'être mis en forme par filage inverse au moyen d'un poinçon (ou plusieurs selon notamment la quantité de matière à filer) dont la forme en V correspond à la forme finale interne du profil interne 28 de la base 22 du renfort métallique 18, c'est-à-dire la forme arrondie complémentaire de celle du bord d'attaque 16 de l'aube 10.

A l'issue de ces étapes préalables au procédé de conformage de l'invention, la pièce métallique préformée 30 est une pièce intermédiaire de fabrication sensiblement en forme de V (ou plus exactement de Y) comportant deux ailettes latérales 32, 34 ayant un angle d'ouverture compris entre 60° et 90° et s'étendant depuis un nez plein 36 correspondant sensiblement à la forme finale de la base 22 du renfort structurel métallique 18. Les épaisseurs des ailettes latérales ont un profil s'amincissant en s'éloignant du nez pour correspondre avec les faces intrados et extrados de l'aube.

Aux deux extrémités de cette pièce 30, des tourillons 38A, 38B résultant du barreau métallique initial permettent de faciliter la manipulation de la pièce.

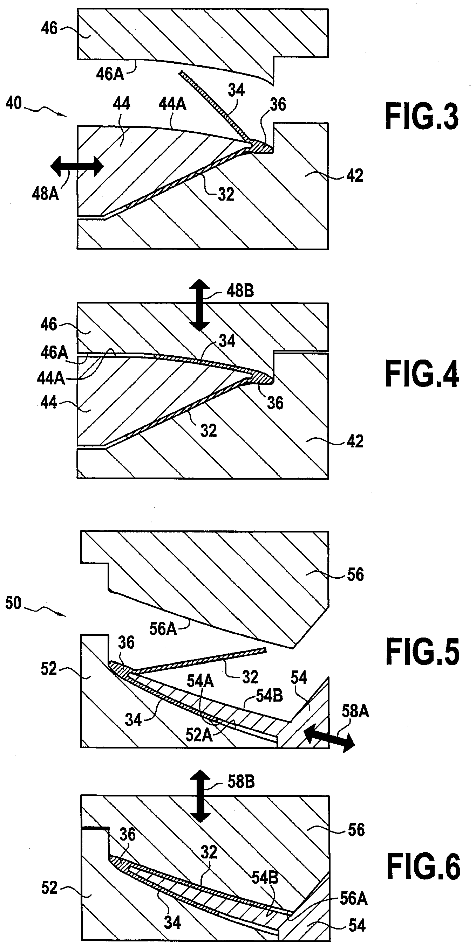

Les figures 3 à 6 illustrent les différentes étapes de réalisation par conformage du renfort structurel métallique 18 depuis la pièce métallique préformée 30 issue des étapes précitées au moyen d'un outillage de forme apte au conformage (formage ou forgeage) à haute température de cette pièce. Cet outillage a pour objet de rapprocher les ailettes latérales 32, 34 et donc de réduire l'angle d'ouverture de façon à obtenir la forme finale recherchée. Il met en oeuvre dans une enceinte fermée (non représentée) et à une température de l'ordre de 920°C (à plus ou moins 20°C), successivement un premier ensemble 40 et un second ensemble 50 comportant chacun une matrice inférieure 42, 52, un insert central mobile 44, 54 et une matrice mobile supérieure 46, 56.

Comme le montre la figure 3, la pièce métallique préformée 30 est tout d'abord mis en place dans la matrice inférieure 42 dont elle épouse le contour interne puis l'insert central mobile 44 est déplacé dans la direction 48A (horizontale sur le dessin) jusqu'à venir en contact avec la partie interne du nez 36 pour, dans cette première position, assurer un maintien de la pièce métallique préformée 30 en bloquant sa première ailette latérale 32 entre cet insert central mobile et la matrice inférieure.

La figure 4 illustre l'étape suivante du procédé de l'invention dans laquelle la matrice supérieure 46 est déplacée selon la direction 48B (verticale sur le dessin) pour, en fermant le premier ensemble 40, venir conformer contre l'insert central mobile 44 la seconde ailette latérale 34. Pour ce faire, la paroi supérieure 44A de l'insert central mobile et la paroi inférieure 46A de la matrice supérieure mobile présentent des faces en regard conformées pour laisser entres elles le seul espace nécessaire à la formation de la seconde ailette latérale 34 de la pièce métallique préformée dans sa forme finale, c'est à dire alignée avec le nez 36.

Pour procéder au conformage de la première ailette latérale 32, il est nécessaire de retourner la pièce métallique préformée issue de l'étape intermédiaire de conformage de la seconde ailette latérale 34 et de la mettre en place dans la seconde matrice inférieure 52 de l'outillage de forme dont elle épouse le contour interne, comme l'illustre la figure 5. L'insert central mobile 54 est alors déplacé dans la direction 58A (sensiblement dans le plan moyen des ailettes latérales et donc incliné vers le haut sur le dessin) jusqu'à venir en contact avec la partie interne du nez 36 pour, dans cette seconde position, assurer un maintien de la pièce métallique préformée 30 en bloquant sa seconde ailette latérale 34, préalablement conformée, entre cet insert central mobile et la matrice inférieure 52. Pour ce faire, les faces en regard de l'insert central mobile 54A et de la matrice inférieure 52A sont bien entendu conformées pour laisser entres elles le seul espace nécessaire pour recevoir la seconde ailette latérale.

La figure 6 illustre la dernière étape du procédé de l'invention dans laquelle la matrice supérieure 56 est déplacée selon la direction 58B (verticale sur le dessin) pour en fermant le second ensemble 50 venir conformer contre l'insert central mobile 54 la première ailette latérale 32. Pour ce faire, la paroi supérieure 54B de l'insert central mobile et la paroi inférieure 56A de la matrice supérieure mobile présentent des faces en regard conformées pour laisser entres elles le seul espace nécessaire à la formation de la première ailette latérale 32 de la pièce métallique préformée dans sa forme finale, c'est à dire alignée également avec le nez 36. On maintient l'outillage fermé sur la pièce pendant quelques minutes pour éviter tout risque de retour élastique de la pièce.

A l'issue de ces étapes de conformage, la pièce métallique préformée 30 présente la forme finale en Y du renfort structurel métallique 18 avec ses deux flancs latéraux 24, 26 s'étendant depuis sa base 22 et ayant son angle d'ouverture final requis par les spécifications techniques. Il ne restera alors plus qu'à procéder à l'extraction (préférentiellement à chaud) de ce renfort structurel métallique en déplaçant successivement la matrice supérieure mobile et l'insert central mobile 54 dans leur direction de déplacement respective 58B, 58A (dans le sens opposé à leurs précédents déplacements) pour retirer la pièce métallique préformée du second ensemble 50 puis à couper les tourillons aux deux extrémités de cette pièce pour obtenir le renfort structurel métallique prêt à l'emploi. Dans le cas où l'insert central mobile 54 comprend plusieurs parties, celui-ci est retiré avant de déplacer la matrice supérieure. Cette extraction sera avantageusement facilitée en déposant une couche de protection en Nitrure de bore sur l'insert central mobile et en réalisant l'insert central mobile en plusieurs parties aptes à être retirées individuellement. Si nécessaire et selon son utilisation, cette extraction sera suivie d'un polissage du renfort structurel métallique.

On notera que si le procédé selon l'invention a été décrit principalement pour un renfort structurel métallique à base titane, il est bien entendu également applicable avec des matériaux à base nickel ou encore à base acier à des températures adaptées aux alliages précités.

On notera également que si l'invention a été plus particulièrement décrite en rapport avec le conformage d'un renfort métallique d'une aube composite de turbomachine, il est clair qu'il pourrait également concerner un renfort métallique d'une aube métallique de turbomachine. De même, si l'invention a été plus particulièrement décrite en rapport avec un renfort métallique d'un bord d'attaque d'aube de turbomachine, il est aussi applicable pour la réalisation d'un renfort métallique d'un bord de fuite d'une aube de turbomachine.

## Revendications

1. Procédé de conformage mettant en oeuvre un outillage de forme apte au conformage à haute température d'une pièce métallique préformée (30) ayant deux ailettes latérales (32, 34) s'étendant depuis un nez (36), **caractérisé par** les étapes suivantes :
- mise en place de ladite pièce métallique préformée dans une première matrice inférieure (42) dudit outillage,
- maintien dans une première position déterminée de ladite pièce métallique préformée au moyen d'un premier insert central mobile (44),
- formation d'une (34) desdites ailettes latérales de ladite pièce métallique préformée dans sa forme finale en alignement avec ledit nez au moyen d'une première matrice supérieure mobile (46),
- retournement de ladite pièce métallique préformée dont l'une desdites ailettes latérales est ainsi conformée dans sa forme finale,
- mise en place de ladite pièce métallique préformée dans une seconde matrice inférieure (52) dudit outillage,
- maintien dans une seconde position déterminée de ladite pièce métallique préformée au moyen d'un second insert central mobile (54), et
- formation de l'autre (32) desdites ailettes latérales de ladite pièce métallique préformée dans sa forme finale en alignement avec ledit nez au moyen d'une seconde matrice supérieure mobile (56).

2. Procédé de conformage selon la revendication 1, **caractérisé en ce que** ladite étape de maintien dans une première position déterminée est effectuée par un déplacement selon une première direction (48A) dudit premier insert central mobile.

3. Procédé de conformage selon la revendication 1, **caractérisé en ce que** ladite étape de formation d'une desdites ailettes latérales de ladite pièce métallique préformée est effectuée par le déplacement selon une seconde direction (48B).

4. Procédé de conformage selon la revendication 1, **caractérisé en ce que** ladite étape de maintien dans une seconde position déterminée est effectuée par un déplacement selon une troisième direction (58A) dudit second insert central mobile.

5. Procédé de conformage selon la revendication 4, **caractérisé en ce que** ladite direction de déplacement dudit second insert central mobile correspond sensiblement au plan moyen desdites ailettes latérales.

6. Procédé de conformage selon la revendication 1, **caractérisé en ce que** ladite étape de formation de l'autre desdites ailettes latérales de ladite pièce métallique préformée est effectuée par le déplacement selon une quatrième direction (58B).

7. Procédé de conformage selon la revendication 6 et la revendication 3, **caractérisé en ce que** lesdites seconde et quatrième directions de déplacement respectif desdites première et seconde matrices supérieures mobiles sont identiques.

8. Procédé de conformage selon l'une quelconque des revendications 1 à 7, **caractérisé en ce que** ledit second insert central mobile est recouvert d'une couche de protection en Nitrure de bore pour en faciliter le retrait lors de l'extraction de ladite pièce métallique préformée dudit outillage de forme.

9. Outillage de forme apte au conformage à haute température d'une pièce métallique préformée **caractérisé par** :
. une première matrice inférieure (42) dans laquelle est mise en place ladite pièce métallique préformée,
. un premier insert central mobile (44) pour maintenir dans une première position déterminée ladite pièce métallique préformée,
. une première matrice supérieure mobile (46) pour former une (34) desdites ailettes latérales de ladite pièce métallique préformée dans sa forme finale en alignement avec ledit nez,
. une seconde matrice inférieure (52) dans laquelle est mise en place de ladite pièce métallique préformée préalablement retournée,
. un second insert central mobile (54) pour maintenir dans une seconde position déterminée ladite pièce métallique préformée, et
. une seconde matrice supérieure mobile (56) pour former l'autre (32) desdites ailettes latérales de ladite pièce métallique préformée dans sa forme finale en alignement avec ledit nez.

10. Outillage de forme selon la revendication 9, **caractérisé en ce que** ledit second insert central mobile est recouvert d'une couche de protection en Nitrure de bore.

## Patentansprüche

1. Formungsverfahren, das ein Formwerkzeug verwendet, welches zum Hochtemperaturformen eines vorgeformten Metallwerkstücks (30), das zwei sich von einer Nase (36) aus erstreckende Seitenflügel (32, 34) aufweist, geeignet ist, **gekennzeichnet durch** die folgenden Schritte:
- Anordnen des vorgeformten Metallwerkstücks in einem ersten Untergesenk (42) des Werkzeugs,
- Halten des vorgeformten Metallwerkstücks mittels eines ersten beweglichen mittleren Einsatzes (44) in einer bestimmten ersten Position,
- Formen von einem (34) der Seitenflügel des vorgeformten Metallwerkstücks in seine Endform, mit der Nase fluchtend, mittels eines ersten beweglichen Obergesenks (46),
- Wenden des vorgeformten Metallwerkstücks, von dem einer der Seitenflügel somit in seine Endform geformt ist,
- Anordnen des vorgeformten Metallwerkstücks in einem zweiten Untergesenk (52) des Werkzeugs,
- Halten des vorgeformten Metallwerkstücks mittels eines zweiten beweglichen mittleren Einsatzes (54) in einer bestimmten zweiten Position, und
- Formen des anderen (32) der Seitenflügel des vorgeformten Metallwerkstücks in seine Endform, mit der Nase fluchtend, mittels eines zweiten beweglichen Obergesenks (56).

2. Formungsverfahren nach Anspruch 1, **dadurch gekennzeichnet, dass** der Schritt des Haltens in einer bestimmten ersten Position durch ein Bewegen des ersten beweglichen mittleren Einsatzes entlang einer ersten Richtung (48A) vollzogen wird.

3. Formungsverfahren nach Anspruch 1, **dadurch gekennzeichnet, dass** der Schritt des Formens von einem der Seitenflügel des vorgeformten Metallwerkstücks durch das Bewegen entlang einer zweiten Richtung (48B) vollzogen wird.

4. Formungsverfahren nach Anspruch 1, **dadurch gekennzeichnet, dass** der Schritt des Haltens in einer bestimmten zweiten Position durch ein Bewegen des zweiten beweglichen mittleren Einsatzes entlang einer dritten Richtung (58A) vollzogen wird.

5. Formungsverfahren nach Anspruch 4, **dadurch gekennzeichnet, dass** die Bewegungsrichtung des zweiten beweglichen mittleren Einsatzes im Wesentlichen der mittleren Ebene der Seitenflügel entspricht.

6. Formungsverfahren nach Anspruch 1, **dadurch gekennzeichnet, dass** der Schritt des Formens des anderen der Seitenflügel des vorgeformten Metallwerkstücks durch das Bewegen entlang einer vierten Richtung (58B) vollzogen wird.

7. Formungsverfahren nach Anspruch 6 und Anspruch 3, **dadurch gekennzeichnet, dass** die zweite und die vierte Richtung der jeweiligen Bewegung des ersten und des zweiten beweglichen Obergesenks identisch sind.

8. Formungsverfahren nach einem der Ansprüche 1 bis 7, **dadurch gekennzeichnet, dass** der zweite bewegliche mittlere Einsatz mit einer Schutzschicht aus Bornitrid überzogen ist, um dessen Zurückziehen während des Herausnehmens des vorgeformten Metallwerkstücks aus dem Formwerkzeug zu erleichtern.

9. Formwerkzeug, das zum Hochtemperaturformen eines vorgeformten Metallwerkstücks geeignet ist, **gekennzeichnet durch**:
- ein erstes Untergesenk (42), in dem das vorgeformte Metallwerkstück angeordnet wird,
- einen ersten beweglichen mittleren Einsatz (44) zum Halten des vorgeformten Metallwerkstücks in einer bestimmten ersten Position,
- ein erstes bewegliches Obergesenk (46) zum Formen von einem (34) der Seitenflügel des vorgeformten Metallwerkstücks in seine Endform, mit der Nase fluchtend,
- ein zweites Untergesenk (52), in dem das zuvor gewendete vorgeformte Metallwerkstück angeordnet wird,
- einen zweiten beweglichen mittleren Einsatz (54) zum Halten des vorgeformten Metallwerkstücks in einer bestimmten zweiten Position, und
- ein zweites bewegliches Obergesenk (56) zum Formen des anderen (32) der Seitenflügel des vorgeformten Metallwerkstücks in seine Endform, mit der Nase fluchtend.

10. Formwerkzeug nach Anspruch 9, **dadurch gekennzeichnet, dass** der zweite bewegliche mittlere Einsatz mit einer Schutzschicht aus Bornitrid überzogen ist.

## Claims

1. A shaping method making use of shaper tooling suitable for high-temperature shaping of a preformed metal part (30) having two side fins (32, 34) extending from a nose (36), the method being **characterized by** the following steps:
putting said preformed metal part into place in a first bottom die (42) of said tooling;
holding said preformed metal part in a first determined position by means of a first movable central insert (44);
• shaping one of said side fins (34) of said preformed metal part into its final shape in alignment with said nose by means of a first movable top die (46);
• turning over said preformed metal part having one of said side fins that is thus shaped in its final shape;
• putting said preformed metal part into place in a second bottom die (52) of said tooling;
• holding said preformed metal part in a second determined position by means of a second movable central insert (54); and
• shaping the other one of said side fins (32) of said preformed metal part into its final shape in alignment with said nose by means of a second movable top die (56).

2. A shaping method according to claim 1, **characterized in that** said step of holding in a first determined position is performed by moving said first movable central insert along a first axis (48A).

3. A shaping method according to claim 1, **characterized in that** said step of shaping one of said side fins of said preformed metal part is performed by moving it along a second axis (48B).

4. A shaping method according to claim 1, **characterized in that** said step of holding in a second determined position is performed by moving said second movable central insert along a third axis (58A).

5. A shaping method according to claim 4, **characterized in that** said axis in which said second movable central insert is moved corresponds substantially to the midplane between said side fins.

6. A shaping method according to claim 1, **characterized in that** said step of shaping the other one of said side fins of said preformed metal part is performed by moving it along a fourth axis (58B).

7. A shaping method according to claim 6 and claim 3, **characterized in that** said second and fourth axes along which said first and second movable top dies are moved respectively are identical.

8. A shaping method according to any one of claims 1 to 7, **characterized in that** said second movable central insert is covered in a protective layer of boron nitride in order to facilitate withdrawal when extracting said preformed metal part from said shaper tooling.

9. Shaper tooling suitable for high-temperature shaping of a preformed metal part, the tooling being **characterized by**:
• a first bottom die (42) in which said preformed metal part is put into place;
• a first movable central insert (44) for holding said preformed metal part in a first determined position;
• a first movable top die (46) for shaping one of said side fins (34) of said preformed metal part into its final shape in alignment with said nose;
• a second bottom die (52) in which said preformed metal part is put into place after being turned over;
• a second movable central insert (54) for holding said preformed metal part in a second determined position; and
• a second movable top die (56) for shaping the other one of said side fins (32) of said preformed metal part into its final shape in alignment with said nose.

10. Shaper tooling according to claim 9, **characterized in that** said second movable central insert is covered in a protective layer of boron nitride.
